# EUROPÄISCHE PATENTSCHRIFT

(11) **EP 0 512 538 B1**
(45) Veröffentlichungstag und Bekanntmachung des Hinweises auf die Patenterteilung: **30.08.1995**
(21) Anmeldenummer: 92107701.2
(22) Anmeldetag: 07.05.1992
(51) Int. Cl.: B01D 17/02, E03F 5/16

(54) **Flüssigkeitsabscheider**
Liquid separator
Séparateur de liquides

(30) Priorität: 09.05.1991 DE 9105766 U
(43) Veröffentlichungstag der Anmeldung: 11.11.1992
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Lasch, Hartmut Dipl.-Ing.

(56) Entgegenhaltungen:
- DE-A- 3 612 288
- GB-A- 1 026 201
- US-A- 2 585 878
- US-A- 4 089 784

## Beschreibung

Die Erfindung betrifft einen Flüssigkeitsabscheider insbesondere zum Trennen von Gemischen aus Wasser und spezifisch leichteren Flüssigkeiten, wie Öl, Benzin oder dergleichen, mit einem Behälter, der einen Einlauf und einen Ablauf aufweist, einem an den Einlauf anschließenden Abscheiderbereich und einer im Flüssigkeitsabscheider stationär angeordneten Fördervorrichtung, mittels der die im Abscheiderbereich abgeschiedene Leichtflüssigkeit in einen Auffangbehälter transportierbar ist.

Flüssigkeitsabscheider zum Trennen von Öl- oder Benzin-Wassergemischen werden vielfältig benötigt, um den heutigen strengen Abwasservorschriften genügen zu können. Durch die physikalischen Vorgänge der Sedimentation sowie des Aufschwimmens bei sog. Schwerkraftabscheidern bzw. der Sedimentation, des Aufschwimmens, der Flotation, der Adsorption sowie aufgrund von Auftriebskräften in sog. Koaleszenzabscheidern, bei denen Koaleszenzfilter eingesetzt werden, wird erreicht, daß verunreinigte Abwässer in einem Flüssigkeitsabscheider gereinigt werden können. Beispielsweise bei ölbelasteten Abwässern schwimmt das Öl zu einer oberen Schicht auf, während das gesäuberte Wasser über einen Ablauf aus dem Flüssigkeitsabscheider abfließen kann. Der Ölfilm, der sich im Laufe der Zeit an der Oberfläche der im Abscheiderbereich des Flüssigkeitsabscheiders befindlichen Flüssigkeit bildet, kann je nach Art des Flüssigkeitsabscheiders eine Dicke von 5 cm bis 50 cm erreichen.

Wenn die Dicke der Ölschicht einen vorbestimmten Wert erreicht hat, ist es notwendig, das abgeschiedene Öl aus dem Flüssigkeitsabscheider zu entfernen. Zu diesem Zweck wird das Öl üblicherweise mit Hilfe einer Saugvorrichtung, beispielsweise einem sog. Saugwagen, zusammen mit der im Flüssigkeitsabscheider befindlichen Flüssigkeit abgesaugt. Das Absaugen des Öls, das üblicherweise von damit beauftragten Dritten ausgeführt wird, ist aufgrund der relativ teuren Saugvorrichtung sehr kostenintensiv. Darüber hinaus ist es sehr zeitaufwendig, wobei der Flüssigkeitsabscheider in dem Zeitraum zwischen dem Erreichen der vorbestimmten Dicke der Ölschicht und der Beendigung des Absaugens nicht genutzt werden kann, so daß relativ lange Totzeiten auftreten.

Um die Abführung bzw. Entsorgung der sich im Flüssigkeitsabscheider ansammelnden Ölschicht zu verbessern, ist es aus der DE-A-36 12 288 bekannt, in dem Behälter eine Fördervorrichtung in Form einer Pumpe anzuordnen. Wenn ein Sensor eine ausreichende Dicke der Ölschicht feststellt, wird die Pumpe in Betrieb gesetzt und das Öl aus dem im Erdboden angeordneten Behälter in einen externen Tank gepumpt, in dem es gesammelt wird. Über die Ausbildung und Anordnung des Tankes ist in der DE-A-36 12 288 nichts ausgesagt. Wenn der Tank an der Erdoberfläche angeordnet ist, ist er dort aufgrund seines Platzbedarfes hinderlich. Wenn der Tank ebenfalls im Erdboden eingebaut ist, ist er relativ schwer zugänglich, wodurch der zeitliche und kostenmäßige Aufwand bei seiner Entleerung wesentlich erhöht ist.

Der Erfindung liegt die Aufgabe zugrunde, einen Flüssigkeitsabscheider zu schaffen, der eine einfache und kostengünstige Entfernung der abgeschiedenen Leichtflüssigkeit ermöglicht.

Diese Aufgabe wir erfindungsgemäß durch einen Flüssigkeitsabscheider mit den kennzeichnenden Merkmalen des Anspruchs 1 gelöst.

Erfindungsgemäß ist der Behälter des Flüssigkeitsabscheiders soweit unterhalb der Erdoberfläche angeordnet, daß ein Schacht von den Flüssigkeitsabscheider zur Erdoberfläche führt. Dieser Schacht kann die Fördervorrichtung und den Aufrangbehälter aufnehmen, so daß der Auffangbehälter integrierter Bestandteil des Flüssigkeitsabscheiders ist und an der Erdoberfläche keinen Platz benötigt. Der Auffangbehälter ist nahe der Erdoberfläche unterhalb von dieser im Schacht angeordnet, so daß er von der Erdoberfläche aus leicht zugänglich ist. Durch die Anordnung der Fördervorrichtung in dem Schacht kann das unterschiedliche Höhenniveau zwischen dem Auffangbehälter und der Schicht der abgeschiedenen Leichtflüssigkeit überwunden werden, so daß ein Absaugen der abgeschiedenen Leichtflüssigkeit nicht mehr notwendig ist. Der Auffangbehälter ist auswechselbar gelagert, d.h. aus dem Schacht entnehmbar, so daß der Betreiber des Flüssigkeitsabscheiders selbst den Auffangbehälter in einfacher Weise entleeren kann, wenn dieser gefüllt ist, wodurch die Kosten gering gehalten sind. Der Auffangbehälter kann beispielsweise gegen einen leeren Auffangbehälter ausgewechselt werden. Auf diese Weise ist der Zeitraum minimiert, in dem der Flüssigkeitsabscheider wegen Erreichens einer vorbestimmten Menge abgeschiedener Leichtflüssigkeit nicht betrieben werden kann. Des weiteren kann der Betreiber des Flüssigkeitsabscheiders in einfacher Weise durch Augenschein überprüfen, ob der Behälter bereits voll ist und somit geleert werden muß, so daß auf diese Weise das Wartungsintervall optimiert werden kann.

Da die Fördervorrichtung und der Auffangbehälter in dem zu der Erdoberfläche führenden Schacht angeordnet sind, ist gewährleistet, daß die Leichtflüssigkeit bei ihrer Förderung mittels der Fördervorrichtung nicht aus dem Flüssigkeitsabscheider in das umgebende Erdreich austreten kann, da die Fördervorrichtung durch den Schacht sowie den Behälter des Flüssigkeitsabscheiders vollständig umgeben ist.

Wenn als Schacht ein Einstieg- und Wartungsschacht verwendet wird, ist auch die Fördervorrichtung im Bedarfsfalle zum Zwecke der Reparatur oder dergleichen leicht zugänglich.

Eine konstruktiv einfache Ausbildung der Fördervorrichtung ist erreicht, wenn diese aus mehreren Rollen sowie einem mittels der Rollen geführten und angetriebenen Transportband besteht. Dabei ist es insbesondere vorteilhaft, die Rollen im wesentlichen vertikal übereinander anzuordnen, wodurch eine große Förderhöhe unter Verwendung eines nur geringen Bauraums erreicht ist. Die zumindest teilweise Anordnung der unteren Rolle in der abgeschiedenen Flüssigkeit gewährleistet dabei, daß auch das über die Rolle geführte Transportband in die abgeschiedene Flüssigkeit eintaucht und somit diese zuverlässig aufnehmen kann.

Bevorzugterweise ist das Transportband als Endlosband ausgebildet, wodurch eine kontinuierliche Förderung bzw. Ableitung der abgeschiedenen Flüssigkeit erzielt werden kann.

Das Transportband kann die abgeschiedene Flüssigkeit beispielsweise mit schaufelartigen Ansätzen abschöpfen, es hat sich jedoch als vorteilhaft erwiesen, wenn das Transportband aus einem Öl bzw. Benzin aufsaugenden Gewebematerial besteht und somit der Flüssigkeitstransport aufgrund der inneren Struktur des Transportbandes erzielt wird.

Bei dem erfindungsgemäßen Flüssigkeitsabscheider sind langwierige Vorbereitungen oder Planungen für die Entsorgung der abgeschiedenen Flüssigkeit nicht notwendig, sondern der Auffangbehälter kann in sehr kurzer Zeit ausgetauscht oder geleert werden. Dabei ist es jedoch ablauftechnisch vorteilhaft, den Auffangbehälter erst dann auszutauschen oder zu leeren, wenn er gefüllt ist. Um den Füllungsstand des Auffangbehälters in einfacher Weise feststellen zu können, ist in vorteilhafter Weiterbildung der Erfindung eine Anzeigevorrichtung vorgesehen, mittels der der Füllungsgrad des Auffangbehälters festgestellt werden kann. Die Anzeigevorrichtung, bei der es sich um eine optische und/oder akustische Anzeigevorrichtung handeln kann, signalisiert einer Bedienperson, ob der Auffangbehälter bereits voll ist und geleert werden muß oder ob der Flüssigkeitsabscheider weiterhin mit dem eingesetzten Auffangbehälter betrieben werden kann.

Um ein Überschreiten eines vorbestimmten Füllungsgrades des Auffangbehälters und somit gegebenenfalls das Eindringen der Verunreinigungen in das Erdreich zuverlässig vermeiden zu können, kann erfindungsgemäß eine Alarmvorrichtung vorgesehen sein, die die Bedienperson auf das Erreichen eines vorbestimmten Füllungsgrades in optischer und/oder akustischer Weise aufmerksam macht.

Nachstehend ist die Erfindung anhand von einem in der Zeichnung wiedergegebenen Ausführungsbeipiel beschrieben. In der Zeichnung zeigen:
- Figur 1:: eine Skizze des schematischen Aufbaus eines erfindungsgemäßen Flüssigkeitsabscheiders und
- Figur 2:: einen Schnitt durch einen Flüssigkeitsabscheider mit einer Fördervorrichtung.

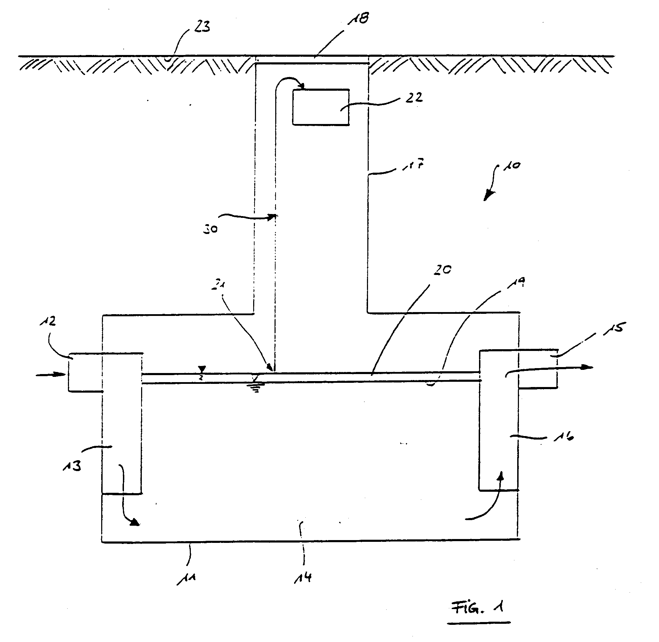

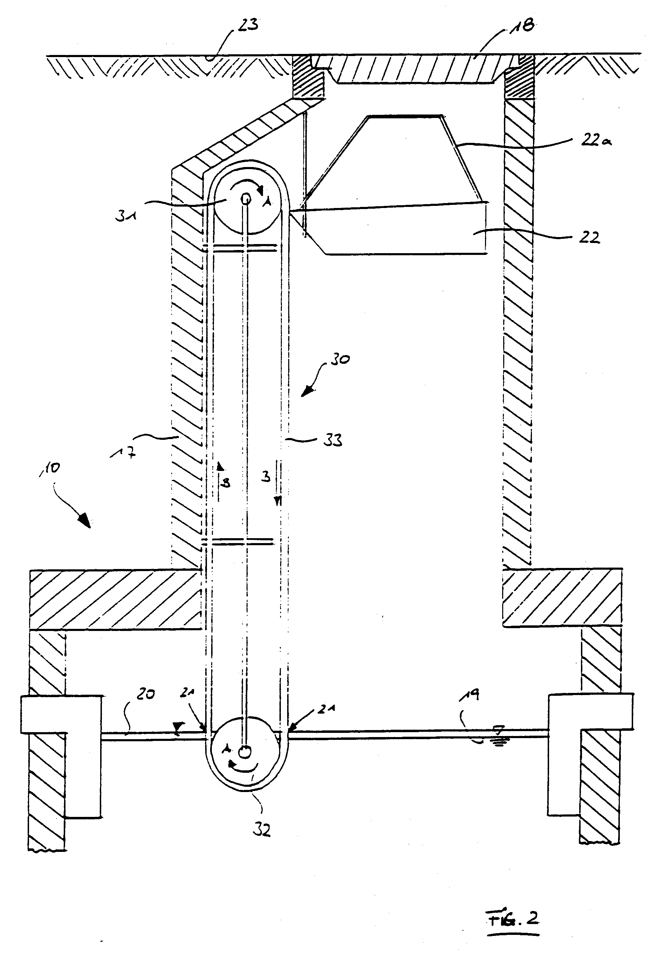

Der in der Figur 1 und 2 dargestellte Flüssigkeitsabscheider weist einen Behälter 11 auf, der in seinem oberen Bereich mit einem Einlauf 12 sowie an der gegenüberliegenden Seite mit einem Ablauf 15 versehen ist.

Am Einlauf 12 des Behälters 11 ist eine Einlaufschikane 13 angeordnet, die einen nach unten offenen, kurzen Schacht bildet und mittels der das über den Einlauf 12 zuströmende Flüssigkeitsgemisch nach unten in die Tiefe des Behälters 11 umgelenkt wird. Das Flüssigkeitsgemisch durchströmt einen an den Einlauf 12 anschließenden Abscheiderbereich 14, in dem ein großer Teil der abzuscheidenden Flüssigkeit nach dem Schwerkraftprinzip getrennt wird. Die Leichtflüssigkeits-Tröpfchen haben ausreichend Zeit, um in beruhigter Strömung aufzusteigen und sich durch Anlagerung zu vergrößern. Die abgeschiedene Leichtflüssigkeit sammelt sich an der Oberfläche 19 der zu reinigenden Flüssigkeit zu einer Schicht 20, während die gereinigte Flüssigkeit den Behälter 11 über einen aufsteigenden Ablaufschacht 16 und den Ablauf 15 verläßt.

Wie in Figur 1 angedeutet, ist der Flüssigkeitsabscheider 10 im Erdreich unterhalb der Erdoberfläche 23 angeordnet. Der Behälter 11 weist an seiner Oberseite einen Schacht 17 auf, der an der Erdoberfläche 23 mündet und über den der Behälter 11 bzw. der Flüssigkeitsabscheider 10 zugänglich ist. Um einerseits einen ständigen Zugang zu dem Schacht 17 zu ermöglichen und um andererseits das Eindringen von Verunreinigungen in den Schacht 17 und somit den Abscheiderbereich 14 des Behälters 11 zuverlässig zu vermeiden, ist der Schacht 17 an seinem oberen Ende mit einer lösbaren Schachtabdeckung 18 versehen. Die Abdeckung kann beispielsweise ein Klappdeckel sein.

Innerhalb des Schachtes 17 ist eine im wesetnlichen vertikal verlaufende Fördervorrichtung 30 angeordnet, die in Figur 1 nur angedeutet, jedoch in Figur 2 im Detail dargestellt ist. Mi Hilfe der Fördervorrichtung 30 kann die abgeschiedene Leichtflüssigkeit, die sich in der Schicht 20 an der Oberfläche 19 der gereinigten Flüssigkeit gesammelt hat, bei 21 aufgenommen und in einen nahe der Erdoberfläche 23 angeordneten Auffangbehälter 22 transportiert werden. Der Auffangbehälter 22 ist nach Öffnen der Schachtabdeckung 18 von der Erdoberfläche 23 zugänglich und kann im Bedarfsfall in einfacher Weise ausgetauscht oder geleert werden.

Wie in Figur 2 dargestellt ist, umfaßt die Fördervorrichtung 30 eine obere Rolle 31 sowie eine untere Rolle 32, die im wesentlichen vertikal unterhalb der oberen Rolle 31 angeordnet ist und teilweise in die Schicht 20 der abgeschiedenen Leichtflüssigkeit eintaucht. Zumindest eine der Rollen 31 bzw. 32 ist mittels einer nicht dargestellten Antriebsvorrichtung angetrieben.

Über die beiden Rollen 31 und 32 verläuft ein Endlosband 33, das aus einem Öl bzw. Benzin aufsaugenden Gewebematerial besteht und im Bereich der unteren Rolle 32 durch die Schicht 20 der abgeschiedenen Leichtflüssigkeit geführt ist.

Wenn die Fördervorrichtung mittels der nicht dargestellten Antriebsvorrichtung in Betrieb gesetzt wird, drehen sich die beiden Rollen 31, bzw. 32 jeweils in der Richtung der Pfeile A, während das Endlosband 33 in Richtung der Pfeile B verschoben wird. Beim Eintreten bzw. Austreten des Endlosbandes 33 in die bzw. aus der Schicht 20 der abgeschiedenen Leichtflüssigkeit wird diese von dem Endlosband 33 aufgenommen und gemäß Figur 2 vertikal nach oben transportiert. Im Bereich der oberen Rolle 32 wird die vom Endlosband 33 transportierte abgeschiedene Leichtflüssigkeit mittels eines Abstreifers 24 oder einer anderen Abgabevorrichtung in den Auffangbehälter 22 abgegeben, in dem sie sich ansammelt.

Der Auffangbehälter 22 ist auswechselbar gelagert und weist einen Handgriff 22a auf, mittels dessen er nach Öffnen der Schachtabdeckung 18 ergriffen und an die Erdoberfläche 29 gezogen werden kann.

## Patentansprüche

1. Flüssigkeitsabscheider insbesondere zum Trennen von Gemischen aus Wasser und spezifisch leichteren Flüssigkeiten wie Öl, Benzin oder dergleichen, mit einem unterhalb der Erdoberfläche angeordneten Behälter (11), der einen Einlauf (13) und einen Ablauf (16) aufweist, einem an den Einlauf anschließenden Abscheiderbereich (14) und einer im Flüssigkeitsabscheider stationär angeordneten Fördervorrichtung (30), mittels der die im Abscheiderbereich (14) abgeschiedene Leichtflüssigkeit (20) in einen Auffangbehälter (22) transportierbar ist, dadurch gekennzeichnet, daß die Fördervorrichtung (30) und der Auffangbehälter (22) in einem von dem Flüssigkeitsabscheider zu der Erdoberfläche (23) führenden Schacht (17) angeordnet sind, wobei der Auffangbehälter (22) nahe der Erdoberfläche (23) unterhalb von dieser auswechselbar gelagert ist.

2. Flüssigkeitsabscheider nach Anspruch 1, dadurch gekennzeichnet, daß der Schacht (17) ein Einstiegs- und Wartungsschacht ist.

3. Flüssigkeitsabscheider nach Anspruch 1 oder 2, dadurch gekennzeichnet, daß die Fördervorrichtung (30) zumindest zwei Rollen (31, 32) sowie ein mittels der Rollen (31, 32) geführtes und angetriebenes Transportband (33) umfaßt.

4. Flüssigkeitsabscheider nach Anspruch 3, dadurch gekennzeichnet, daß die Rollen (31, 32) im wesentlichen vertikal übereinander angeordnet sind.

5. Flüssigkeitsabscheider nach Anspruch 3 oder 4, dadurch gekennzeichnet, daß eine untere Rolle (32) zumindest teilweise in die abgeschiedene Flüssigkeit (20) eintaucht.

6. Flüssigkeitsabscheider nach einem der Ansprüche 3 bis 5, dadurch gekennzeichnet, daß das Transportband (33) ein Endlosband ist.

7. Flüssigkeitsabscheider nach einem der Ansprüche 3 bis 6, dadurch gekennzeichnet, daß das Transportband (33) aus einem Öl bzw. Benzin aufsaugenden Gewebematerial besteht.

8. Flüssigkeitsabscheider nach einem der Ansprüche 1 bis 7, gekennzeichnet durch eine Anzeigevorrichtung, mittels der der Füllungsgrad des Auffangbehälters (22) erfaßbar ist.

9. Flüssigkeitsabscheider nach einem der Ansprüche 1 bis 8, gekennzeichnet durch eine Alarmvorrichtung, mittels der das Überschreiten eines vorbestimmten Füllungsgrades des Auffangbehälters (22) anzeigbar ist.

## Claims

1. Liquid separator, particularly for separating mixtures of water and specifically lighter liquids such as oil, petrol, etc., with a container (11) located below the earth's surface, which has an inlet (13) and an outlet (16), a separator area (14) connected to the inlet and a conveying mechanism (30) arranged in stationary manner in the liquid separator and by means of which the light liquid (20) separated in the separator area (14) can be conveyed into a receiving tank (22), characterized in that the conveying mechanism (30) and the receiving tank (22) are arranged in a shaft (17) leading from the liquid separator to the earth's surface (23), the receiving tank (22) being interchangeably placed close to and below the earth's surface (23).

2. Liquid separator according to claim 1, characterized in that the shaft (17) is an entrance and maintenance shaft.

3. Liquid separator according to claim 1 or 2, characterized in that the conveying mechanism (30) has at least two pulleys (31, 32) and also a conveyor belt (33) guided and driven by the pulleys (31, 32).

4. Liquid separator according to claim 3, characterized in that the pulleys (31, 32) are substantially vertically superimposed.

5. Liquid separator according to claim 3 or 4, characterized in that a lower pulley (32) is at least partly immersed in the separated liquid (20).

6. Liquid separator according to one of the claims 3 to 5, characterized in that the conveyor belt (33) is an endless belt.

7. Liquid separator according to one of the claims 3 to 6, characterized in that the conveyor belt (33) is made from a fabric absorbing oil and/or petrol.

8. Liquid separator according to one of the claims 1 to 7, characterized by an indicator by means of which it is possible to establish the filling level of the receiving tank (22).

9. Liquid separator according to one of the claims 1 to 8, characterized by an alarm by means of which it is possible to indicate the exceeding of a predetermined filling level of the receiving tank (22).

## Revendications

1. Séparateur de liquides, notamment pour la séparation de mélanges d'eau et de liquides spécifiquement plus légers tels que l'huile, l'essence ou analogues, comportant un récipient (11) disposé en-dessous du niveau du sol et présentant une entrée (13) et une sortie (16), un compartiment de séparation (14) relié à l'entrée et un système d'évacuation (30) monté fixe dans le séparateur de liquides, permettant d'acheminer le liquide léger (20) séparé dans le compartiment de séparation (14) jusqu'à un bac de réception (22), caractérisé en ce que le système d'évacuation (30) et le bac de réception (22) sont disposés dans un puits (17) conduisant du séparateur jusqu'au niveau (23) du sol, le bac de réception (22) étant monté interchangeable en-dessous et à proximité du niveau du sol.

2. Séparateur selon la revendication 1, caractérisé en ce que le puits (17) est un puits d'accès et d'entretien.

3. Séparateur selon l'une des revendications 1 ou 2, caractérisé en ce que le système d'évacuation (30) comporte au moins deux rouleaux (31,32) ainsi qu'une bande transporteuse (33) guidée et entraînée par les poulies (31,32).

4. Séparateur selon la revendication 3, caractérisé en ce que les rouleaux (31,32) sont disposés sensiblement verticaux l'un au-dessus de l'autre.

5. Séparateur selon l'une quelconque des revendications 3 ou 4, caractérisé en ce que l'un inférieur (32) des rouleaux est immergé au moins partiellement dans le liquide séparé (20).

6. Séparateur selon l'une quelconque des revendications 3 à 5, caractérisé en ce que la bande transporteuse (33) est une bande continue.

7. Séparateur selon l'une quelconque des revendications 3 à 6, caractérisé en ce que la bande transporteuse (33) est constituée d'un matériau en tissu absorbant l'huile, respectivement l'essence.

8. Séparateur selon l'une quelconque des revendications 1 à 7, caractérisé par un dispositif indicateur du niveau de remplissage du bac de réception (22).

9. Séparateur selon l'une quelconque des revendications 1 à 8, caractérisé par un dispositif d'alarme indiquant le dépassement d'un niveau prédéterminé de remplissage du bac de réception (22).
